# EUROPÄISCHE PATENTSCHRIFT

(11) **EP 2 818 803 B1**
(45) Veröffentlichungstag und Bekanntmachung des Hinweises auf die Patenterteilung: **21.02.2018**
(21) Anmeldenummer: 14174182.7
(22) Anmeldetag: 26.06.2014
(51) Int. Cl.: F24F 11/00, G05B 17/00

(54) **Verfahren zur Regelung des Klimas in einem Gebäude mittels zumindest einer Haus- oder Verfahrenstechnischen Anlage**
Method for controlling the climate in a building using at least one domestic or process technology system
Procédé de régulation d'un système de climatisation dans un bâtiment au moyen d'au moins une installation technologique ou domestique

(30) Priorität: 28.06.2013 DE 102013106806
(43) Veröffentlichungstag der Anmeldung: 31.12.2014
(73) Patentinhaber: Weiher, Uwe, 13156 Berlin (DE)
(72) Erfinder: Weiher, Uwe, 13156 Berlin (DE)
(74) Vertreter: Zimmermann & Partner Patentanwälte mbB

(56) Entgegenhaltungen:
- EP-A2- 2 009 358
- DE-U1-202006 011 806
- US-A1- 2012 065 783
- US-A1- 2012 330 465

## Beschreibung

Die vorliegende Erfindung betrifft ein Verfahren zur Regelung des Klimas in einem Gebäude mittels zumindest einer haus- oder verfahrenstechnischen Anlage.

Es sind verschiedenste Klimaanlagen zur Erzeugung und Aufrechterhaltung eines gleichmäßigen Raumklimas sowie Regelungsverfahren für diese bekannt. Typischerweise sorgen Klimaanlagen für ein definiertes Raumklima, etwa die notwendigen Umgebungsbedingungen für Anlagen und Maschinen oder ein für den Menschen angenehmes Raumklima (z.B. eine Temperatur von ca. 22 °C und ca. 50 % relative Luftfeuchtigkeit). Insbesondere erfordert das Zusammenschalten verschiedener Aggregate zur Luftaufbereitung spezielle Regelungsalgorithmen. Sie nehmen direkten Einfluss auf die Wirtschaftlichkeit, den Ressourcenverbrauch und die Umweltverträglichkeit der Klimaanlage. US 2012/065783 offenbart ein Verfahren zur Regelung des Klimas in einem Gebäude. Im Hinblick auf bestehende Klimaanlagen besteht weiterhin ein Bedarf an verbesserten Regelungsverfahren, die eine optimale Ressourcennutzung und wirtschaftliche Betriebsweise der Klimaanlage erlauben.

Im Hinblick darauf schlägt die vorliegende Erfindung einen Weitere Aspekte, Vorteile und Einzelheiten der vorliegenden Erfindung ergeben sich aus den Unteransprüchen, der Beschreibung sowie den beigefügten Zeichnungen.

Gemäß der vorliegenden Erfindung wird ein Verfahren zur Regelung des Klimas in einem Gebäude mittels zumindest einer haus- oder verfahrenstechnischen Anlage vorgeschlagen. Das Verfahren umfaßt die Schritte des Anspruchs 1. Das hier vorgeschlagene Verfahren nutzt ein thermodynamisches Modell des Gebäudes, um eine verbesserte Verfahrensführung zu gewährleisten. Auf diese Weise kann beispielsweise ein thermodynamisches Modell der Gebäudekonstruktion, das etwa aufgrund bauphysikalischer Parameter des Gebäudes gebildet ist, zur Regelung herangezogen werden. Beispielsweise können die bauphysikalische Parameter des Modells einen oder mehrere der folgenden Parameter umfassen: Wandaufbau, Deckenaufbau, Fußbodenaufbau, Fensterfläche, Wärmedurchgangskoeffizienten und Energiedurchlassgrade der Fenster, innere Wärmequellen, wie etwa Computer, Beamer, Lampen, innere Feuchtigkeitsquellen, wie etwa Naßräume, Dachaufbau, Verschattungsanlagen, ein Heizungssystem, ein Lüftungssystem, Sanitäranlagen, elektrische Anlagen, ein Klimasystem, Brunnen, ein Kühlsystem, Aufzüge, Vakuumanlagen, Kochstellen, Hebezeuge. Aufgrund dieser Parameter kann zum einen der Einfluß des äußeren Energieeintrags, z.B. durch Sonneneinstrahlung, als auch der Einfluß interner Wärmequellen, wie etwa Beamer, berücksichtigt werden. Gleichermaßen können interne Feuchtigkeitsquellen berücksichtigt werden, die zu einer Veränderung des Raumklimas führen können. So kann in der Nähe von Naßbereichen die Luftfeuchtigkeit höher sein und weiterhin ein erhöhter Wärmebedarf bestehen, da feuchtere Luft mehr Wärme benötigt, um erwärmt zu werden. Weiterhin kann durch die Berücksichtigung von gebäudetechnischen Einrichtungen, wie etwa großen elektrischen Verbrauchern (Aufzüge, Vakuumanlagen etc.), eine optimale Gebäudesteuerung erfolgen. Ermittelt beispielsweise die Klimaanlagenregelung, daß zumindest Teile des Gebäudes gekühlt werden müssen, so kann z.B. einer von mehreren Aufzügen gesperrt werden, um eine maximale Energieaufnahme des Gebäudes nicht zu überschreiten.

Gemäß einer Weiterbildung umfaßt das thermodynamische Modell ein Modell zur Gebäudenutzung, und ist insbesondere tageszeitabhängig und/oder lastabhängig. So kann beispielsweise das Modell zur Gebäudenutzung zumindest einen der folgenden Parameter umfassen: geschätzte Anzahl der Personen in einem Raum, geschätzte Anzahl von thermodynamisch relevanten Betriebsmitteln in einem Raum, Raumbelegungspläne, Urlaubszeiten, Krankheitstage, Abwesenheitszeiten, Art und Umfang von Tätigkeiten. Auf diese Weise kann die Klimaregelung deutlich zielgenauer arbeiten als bei bisherigen Systemen. Insbesondere stellen Personen in einem Raum immer auch Wärme- und Feuchtigkeitsquellen dar, die bei der Regelung berücksichtigt werden können. Da heutzutage Raumbelegungspläne, Urlaubspläne etc. ohnehin meist elektronisch vorliegen, ist eine Verknüpfung mit der Klimaregelung ohne unzumutbaren Aufwand herstellbar. Weiterhin kann die Klimaregelung auch mit einem System zur Zugangserfassung, z.B. über RFID-Leser, die in oder an Durchgängen zwischen Räumen angeordnet sind, verknüpft sein. Auf diese Weise kann die Personenzahl in einem bestimmten Raum automatisch erfaßt werden.

Gemäß noch einer Weiterbildung umfaßt das thermodynamische Modell ein Modell der Gebäudeumgebung, insbesondere eine Verschattung, beispielsweise durch Nachbargebäude oder Bäume, wobei diese vorzugsweise in Abhängigkeit vom aktuellen Sonnenstand ermittelt wird. Durch Berücksichtigung der Gebäudeumgebung kann die Klimaregelung zum einen zielgenauer und zum anderen energiesparender erfolgen, da Umgebungseffekt ausgenutzt werden können.

Gemäß noch einer Weiterbildung kann das thermodynamische Modell ein empirisches Gebäudemodell umfassen. Insbesondere kann die Klimaregelung selbstlernend sein und Veränderungen gegenüber der ursprünglichen Startkonfiguration (bspw. durch bauliche Veränderungen und/oder veränderte Gebäudenutzung) selbst erkennen. Bei älteren Bestandsgebäuden sind ggf. auch einige bauphysikalische Parameter nicht hinreichend genau bekannt und/oder ermittelbar, so daß diese über eine Heuristik bzw. das empirische Gebäudemodell ermittelt und/oder geschätzt werden können. Beispielsweise kann das empirische Model durch Zusammenführen historischer Werte zu den Ist-Daten der zumindest einen Eingangsgröße, den zugehörigen ermittelten Werten der zumindest einen Stellgröße sowie ermittelten Werten zumindest einer Regelgröße gebildet sein.

Gemäß einer Weiterbildung umfaßt die zumindest eine Eingangsgröße mindestens einen der folgenden Parameter: eine Außentemperatur, eine Raumtemperatur, eine Lichtintensität, eine Luftfeuchte, einen Luftdruck, eine Windgeschwindigkeit, ein Datum, eine Uhrzeit, geographische Koordinaten des Gebäudes, eine Vorlauftemperatur einer Heizungsanlage, eine Rücklauftemperatur einer Heizungsanlage, einen elektrischen Stromverbrauch, einen Wasserverbrauch, einen Gasverbrauch, einen Ölverbrauch, eine Wärmeenergiemenge, die Enthalpie der Gebäudeluft. Selbstverständlich kann die Regelung auch sämtliche der vorgenannten Größen oder eine Unterauswahl davon als Eingangsgröße erhalten. Insbesondere die Enthalpie der Gebäudeluft, beispielsweise auch bezogen auf verschiedene Unterbereiche des Gebäudes, ist eine interessante Eingangsgröße, da hier sowohl der gesamte Wärmeinhalt der Luft betrachtet wird und auch der herrschende Luftdruck mitberücksichtigt ist.

Gemäß einer anderen Weiterbildung umfaßt die Eingangsgröße eine Wettervorhersage. Beispielsweise kann die Wettervorhersage über Internet an die Klimaregelung gegeben werden, wobei zum einen das aktuelle Wetter abgefragt und mit in bzw. am Gebäude angeordneten Sensoren abgeglichen werden kann. Weiterhin kann eine kurzfristige Vorhersage über die nächsten Stunden genutzt werden, um die Klimaregelung zu führen. So können beispielsweise kurzzeitige Temperaturunterschreitungen toleriert werden, wenn absehbar eine Aufheizung durch Sonneneinstrahlung zu erwarten ist. Andernfalls müßte beispielsweise erst geheizt und dann gekühlt werden, was für den Gesamtenergieverbrauch des Gebäudes nachteilig wäre. Ebenfalls kann die Abkühlung und der Luftfeuchtigkeitsanstieg durch einen bevorstehenden Regen berücksichtigt werden.

Gemäß noch einer Weiterbildung kann eine jeweilige Raumtemperatur in dem Gebäude modulierend einen Biorhythmus berücksichtigen. So kann beispielsweise am frühen Nachmittag das sogenannte Mittagstief durch etwas kühlere Temperaturen aufgefangen werden. Auf diese Weise kann die Produktivität von in dem Gebäude arbeitenden Personen erhöht werden.

Gemäß noch einer Weiterbildung umfaßt die zumindest eine ermittelte Stellgröße zumindest einen der folgenden Parameter: eine Vorlauftemperatur, eine Pumpenleistung, einen elektrischen Stromverbrauch, einen Wasserverbrauch, einen Gasverbrauch, einen Ölverbrauch, eine Wärmeenergiemenge. Insbesondere kann die ermittelte Stellgröße eine Störgröße sein, die zusammen mit der zumindest einen Eingangsgröße verarbeitet wird, und an eine Regelung der haus- oder verfahrenstechnischen Anlage übermittelt wird. Dabei kann die Regelung der haus- oder verfahrenstechnischen Anlage entweder stromgeführt oder spannungsgeführt sein, und die Störgröße entsprechend als Stromwert oder als Spannungswert ausgegeben werden.

Gemäß einem weiteren Ausführungsbeispiel kann die Regelung der zumindest einen haus- oder verfahrenstechnischen Anlage so eingerichtet sein, daß ein Energieeinsatz im Gebäude reduziert wird.

Gemäß einem Ausführungsbeispiel umfaßt eine haus- oder verfahrenstechnischen Anlage für ein Gebäude zumindest einen Dateneingang zur Verbindung mit einem Sensor zur Ermittlung von Ist-Daten zumindest einer Eingangsgröße, zumindest einen Datenausgang zur Verbindung mit zumindest einem Stellglied zur Einstellung zumindest einer Stellgröße, und eine Regelung, die ein thermodynamisches Modell des Gebäudes umfaßt und eingerichtet ist, eines der oben beschriebenen Regelungsverfahren auszuführen. Insbesondere kann die haus- oder verfahrenstechnische Anlage eine Regeleinheit und eine davon separate Simulationseinheit aufweisen, wobei das thermodynamische Modell in der separaten Simulationseinheit bereitgestellt wird. Eine solchermaßen eingerichtete Anlage kann das Gebäudeklima vorteilhaft regeln.

Gemäß einer Weiterbildung umfaßt die haus- oder verfahrenstechnische Anlage weiterhin eine Verarbeitungseinheit, die zumindest einen Signaleingang aufweist, der mit dem Sensor verbunden ist und Ist-Daten der zumindest einen Eingangsgröße erhält, sowie einen weiteren Signaleingang aufweist, der mit der Simulationseinheit verbunden ist und eine Störgröße als Ausgabe der Simulationseinheit erhält. Dabei ist die Verarbeitungseinheit eingerichtet, aus den Ist-Daten der zumindest einen Eingangsgröße und der Störgröße ein Eingangssignal für die Regeleinheit zu bilden, und weist weiterhin einen Signalausgang auf, über den die Eingangsgröße an die Regeleinheit übermittelt werden kann.

Anhand der beigefügten Zeichnungen werden nun Ausführungsbeispiele der vorliegenden Erfindung erläutert. Dabei zeigen:
- Fig. 1: eine schematische Darstellung eines Gebäudes, in dem eine haus- oder verfahrenstechnische Anlage gemäß einem Ausführungsbeispiel der vorliegenden Erfindung eingesetzt wird.
- Fig. 2: eine schematische Darstellung einer haus- oder verfahrenstechnische Anlage gemäß einem Ausführungsbeispiel der vorliegenden Erfindung.
- Fig. 3: eine schematische Darstellung einer haus- oder verfahrenstechnische Anlage gemäß einem anderen Ausführungsbeispiel der vorliegenden Erfindung.
- Fig. 4: die schematische Darstellung aus Fig. 1 bei verschiedenen Sonnenständen.
- Fig. 5: die schematische Darstellung aus Fig. 1 mit einer externen Verschattung.
- Fig. 6: eine schematische Darstellung einer haus- oder verfahrenstechnische Anlage gemäß einem weiteren Ausführungsbeispiel der vorliegenden Erfindung.
- Fig. 7: die schematische Darstellung aus Fig. 1 mit einer internen Nutzung.
- Fig. 8: ein Flußdiagramm eines Regelverfahrens gemäß einem Ausführungsbeispiel der vorliegenden Erfindung.

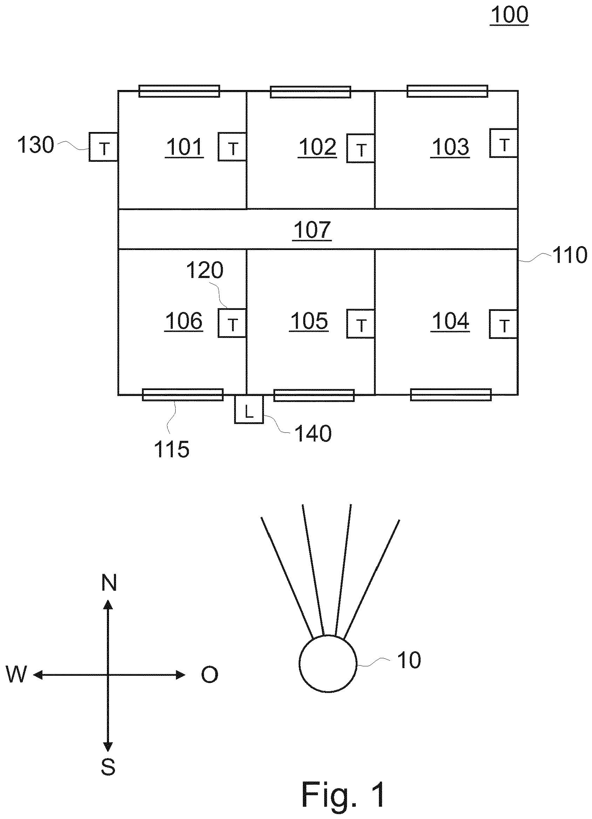

In Fig. 1 ist eine schematische Darstellung eines Gebäudes 100 gezeigt, in dem eine haus- oder verfahrenstechnische Anlage gemäß einem Ausführungsbeispiel der vorliegenden Erfindung eingesetzt werden kann. Das Gebäude 100 wird von einer Gebäudehülle 110 begrenzt und weist in seinem inneren verschiedene, voneinander abgegrenzte Räume 101-107 auf. Die Gebäudehülle 110 ist beispielsweise eine Wand, die Fenster 115 umfaßt. Zur Gebäudehülle gehören noch andere, hier nicht dargestellte, Bauteile wie etwa das Dach, ein Keller oder ähnliches. Im weiteren wird lediglich auf die Gebäudewand und die darin befindlichen Fenster eingegangen, da anhand dieser Beispiele die Funktionsweise der Klimaregelung grundlegend erläutert werden kann.

Das Gebäude 100 verfügt weiterhin über einen oder mehrere Sensoren 120, 130, 140. Die Sensoren können sowohl intern, d.h. im Gebäude, als auch extern, d.h. außerhalb des Gebäudes, angeordnet sein. Im gezeigten Ausführungsbeispiel handelt es sich etwa um interne Temperaturfühler 120, die in einem jeweiligen Raum 101-107 angeordnet sind. In anderen Ausführungsbeispielen können diese Sensoren beispielsweise auch Hygrometer zur Erfassung der Luftfeuchte in einem Raum und/oder Lichtstärkemesser zur Ermittlung der Helligkeit in einem Raum umfassen. Darüber hinaus sind ein oder mehrere Außentemperaturfühler 130 außen am oder in der Nähe des Gebäudes angeordnet. Weiterhin ist ein Lichtstärkemesser 140 außen am oder in der Nähe des Gebäudes angeordnet. Es können weitere externe Sensoren vorgesehen werden, wie etwa Anemometer, Niederschlagssensoren oder Hygrometer. Diese Sensoren dienen zur Ermittlung von Eingangssignalen an die Klimaregelung des Gebäudes, die weiter unten im Detail erläutert wird.

Die internen und externen Sensoren können in ein Managementsystem für technische und/oder bauliche Anlagen eingegliedert und direkt oder indirekt über das Managementsystem mit der Klimaregelung verbunden sein. Ein solches Managementsystem ist beispielsweise in der DE 20 2006 011 806 beschrieben, deren gesamter Inhalt hiermit durch Bezugnahme in die vorliegende Beschreibung aufgenommen wird. Insbesondere kann das Managementsystem ein Identifizierungsmittel zur Identifizierung eines Bereichs, in dem mindestens zwei technische und/oder bauliche Anlagen installiert sind, ein Lesegerät zum Auslesen von auf dem Identifizierungsmittel gespeicherter Identifizierungsinformation, sowie ein mit dem Lesegerät über eine Datenverbindung verbundenes Speichermittel umfassen, wobei das Speichermittel eingerichtet ist, anhand der ausgelesenen Identifizierungsinformation für eine jeweilige der mindestens zwei technischen und/oder baulichen Anlagen eine in dem Speichermittel gespeicherte anlagenspezifische Information zu ermitteln. Auf diese Weise ermöglicht das Managementsystem, dass für einen definierten Bereich, in dem mehrere technische und/oder bauliche Anlagen, insbesondere Sensoren, installiert sind, lediglich ein Identifizierungsmittel bereitgestellt werden muss. Auf diese Weise muss etwa ein Wartungstechniker nicht sämtliche technischen und/oder baulichen Anlagen einzeln abfragen sondern erhält über die zentrale Datenbank des Speichermittels sofort einen Überblick über den technischen Zustand aller Anlagen in dem betreffenden Bereich. Die in dem Speichermittel gespeicherte anlagenspezifische Information kann insbesondere eine der folgenden Informationen umfassen: eine Inventarnummer, eine Instandhaltungsinformation, ein Wartungsintervall, ein Wartungsdatum, eine Instandsetzungsinformation, ein Inspektionsdatum, ein Inspektionsintervall, ein Reinigungsdatum, ein Reinigungsintervall, ein Prüfintervall. Die auf dem Identifizierungsmittel gespeicherte Identifizierungsinformation kann insbesondere eine der folgenden Informationen umfassen: eine Raumnummer, eine Schlüsselzuweisung zur Kennzeichnung von Bauteilen, eine Leistungsangabe, einen technischen Parameter, eine Typenbezeichnung, eine örtliche Zuweisungen, eine Temperatur, einen Druck, eine Beleuchtung, eine Fahrgestellnummer, eine Motornummer, eine Zulassungsnummer. Das Identifizierungsmittel kann als ein Transponder, ein Barcode-Etikett oder ein Strichcode-Etikett ausgebildet sein. Für diese Identifizierungsmittel sind kostengünstige und einfach zu bedienende Lesegeräte bekannt. Insbesondere können Transponder auch aus einer gewissen Entfernung gelesen werden, so dass hier eine weitere Erleichterung beim Ablesevorgang gewährleistet wird. Weiterhin kann die Verbindung zwischen Lesegerät und Speichermittel eine drahtlose Verbindung sein. Insbesondere innerhalb von Gebäuden kann auf diese Weise beispielsweise bei einem tragbaren Lesegerät die Datenverbindung ständig aufrechterhalten werden. Denkbar ist beispielsweise eine Verbindung mittels Bluetooth, Wireless LAN, Infrarot oder beliebigen anderen drahtlosen Kommunikationsstandards. Beispielsweise ist das Speichermittel in dem Lesegerät angeordnet. Dabei kann das Speichermittel z.B. als eine Festplatte, eine Speicherkarte, ein Memorystick und/oder ein Wechseldatenträger ausgebildet sein. Auf diese Weise ist eine Verbindung des Lesegeräts zu einem zentralen Datenbankserver überflüssig, was insbesondere dann von Vorteil ist, wenn das Lesegerät in weit entfernten oder gegenüber Strahlung abgeschirmten Bereichen eingesetzt wird. Das Lesegerät ist vorteilhafterweise tragbar und umfasst beispielsweise einen Laptop, einen Handheld-Computer, einen Tablet-PC oder ein Mobiltelefon. Weiterhin ist der Bereich typischerweise ein Raum in einem Gebäude oder ein festgelegter Abschnitt in einem Gebäude. Beispielsweise können die technischen und/oder baulichen Anlagen eine Lüftung, eine elektrische Verdunkelung, eine Klimaanlage, eine Tür, ein Türschließsystem oder ähnliche für ein Gebäude typische technische und/oder bauliche Installationen sein.

Wie in Fig. 1 beispielhaft gezeigt spielt die Ausrichtung des Gebäudes in Bezug auf die Himmelsrichtung eine wichtige Rolle. So unterliegen die nach Süden ausgerichteten Fenster 115 einer direkten Sonneneinstrahlung, wohingegen die nach Norden ausgerichteten Fenster keine direkte Sonneneinstrahlung abbekommen. Insofern ist sowohl hinsichtlich der Temperatur als auch der Helligkeit von einem regelungstechnisch bedeutsamen Unterschied zwischen den Räumen 101-103 zu den Räumen 104-106 auszugehen. Weiterhin werden die außen gelegenen Räume 101, 103, 104, 106 einen anderen Wärmeverlust über die Gebäudehülle 110 aufweisen als die innengelegenen Räume 102, 105. Aus diesem Beispiel ist ersichtlich, daß alleine die Lage eines Raumes hinsichtlich seiner Ausrichtung einen regelungstechnischen Unterschied nach sich ziehen kann. Nicht gezeigt aber ebenso einsichtig ist, daß auch unterschiedliche Ausgestaltungen der Gebäudehülle 110 solche Effekte zeitigen können. So kann beispielsweise ein Gebäude ein älteres, in Massivbauweise errichtetes Hauptgebäude und einen modernen, in Niedrigenergiebauweise errichteten Anbau umfassen, die zwar von derselben Klimaanlage angesteuert werden, jedoch sehr unterschiedliche bauphysikalische Gegebenheiten aufweisen.

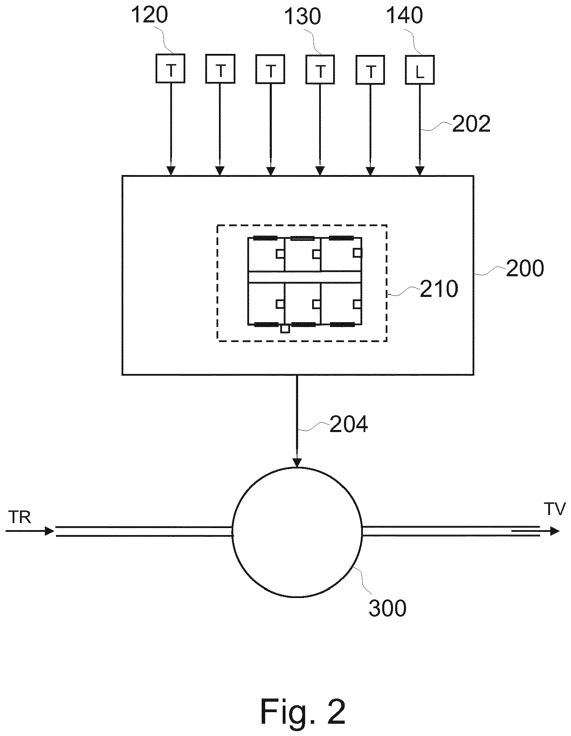

In Fig. 2 ist nun schematische eine haus- oder verfahrenstechnische Anlage 200 gemäß einem Ausführungsbeispiel der vorliegenden Erfindung dargestellt. Die Anlage 200 weist mehrere Dateneingänge 202 zur Verbindung mit den Sensoren 120, 130, 140 auf. Die von den Sensoren 120, 130,140 gemessenen Werte werden der Anlage 200 als Ist-Daten der Eingangsgröße(n) zur Verfügung gestellt. Typische Parameter der Eingangsgrößen sind etwa eine Außentemperatur, eine Raumtemperatur, eine Lichtintensität, eine Luftfeuchte, einen Luftdruck, eine Windgeschwindigkeit, ein Datum, eine Uhrzeit, geographische Koordinaten des Gebäudes, eine Vorlauftemperatur einer Heizungsanlage, eine Rücklauftemperatur einer Heizungsanlage, einen elektrischen Stromverbrauch, einen Wasserverbrauch, einen Gasverbrauch, einen Ölverbrauch, eine Wärmeenergiemenge, die Enthalpie der Gebäudeluft. Selbstverständlich kann die Regelung auch sämtliche der vorgenannten Größen oder eine Unterauswahl davon als Eingangsgröße erhalten. Insbesondere die Enthalpie der Gebäudeluft, beispielsweise auch bezogen auf verschiedene Unterbereiche des Gebäudes, ist eine interessante Eingangsgröße, da hier sowohl der gesamte Wärmeinhalt der Luft betrachtet wird und auch der herrschende Luftdruck mitberücksichtigt ist.

Die Anlage 200 weist weiterhin einen Datenausgang 204 zur Verbindung mit zumindest einem Stellglied 300 zur Einstellung zumindest einer Stellgröße auf. Im gezeigten Ausführungsbeispiel ist das Stellglied 300 eine Heizungsanlage und die Stellgröße die Vorlauftemperatur Tᵥ der Heizungsanlage. Die Anlage 200 weist weiterhin eine Regelung auf, die ein thermodynamisches Modell 210 des Gebäudes umfaßt. Beispielsweise kann das thermodynamische Modell 210 etwa aufgrund bauphysikalischer Parameter des Gebäudes gebildet sein. Solche bauphysikalischen Parameter des Modells können Wandaufbau, Deckenaufbau, Fußbodenaufbau, Fensterfläche, Wärmedurchgangskoeffizienten und Energiedurchlassgrade der Fenster, innere Wärmequellen, wie etwa Computer, Beamer, Lampen, innere Feuchtigkeitsquellen, wie etwa Naßräume, Dachaufbau, Verschattungsanlagen, ein Heizungssystem, ein Lüftungssystem, Sanitäranlagen, elektrische Anlagen, ein Klimasystem, Brunnen, ein Kühlsystem, Aufzüge, Vakuumanlagen, Kochstellen, Hebezeuge oder auch Kombinationen dieser Paramter sein. Aufgrund dieser Parameter kann zum einen der Einfluß des äußeren Energieeintrags, z.B. durch Sonneneinstrahlung, als auch der Einfluß interner Wärmequellen, wie etwa Beamer, berücksichtigt werden. Gleichermaßen können interne Feuchtigkeitsquellen berücksichtigt werden, die zu einer Veränderung des Raumklimas führen können. So kann in der Nähe von Naßbereichen die Luftfeuchtigkeit höher sein und weiterhin ein erhöhter Wärmebedarf bestehen, da feuchtere Luft mehr Wärme benötigt, um erwärmt zu werden. Weiterhin kann durch die Berücksichtigung von gebäudetechnischen Einrichtungen, wie etwa großen elektrischen Verbrauchern (Aufzüge, Vakuumanlagen etc.), eine optimale Gebäudesteuerung erfolgen. Ermittelt beispielsweise die Klimaanlagenregelung, daß zumindest Teile des Gebäudes gekühlt werden müssen, so kann z.B. einer von mehreren Aufzügen gesperrt werden, um eine maximale Energieaufnahme des Gebäudes nicht zu überschreiten.

Das thermodynamische Modell kann auch ganz oder teilweise ein empirisches Gebäudemodell umfassen. Insbesondere kann die Klimaregelung 200 selbstlernend sein und Veränderungen gegenüber einer ursprünglichen Startkonfiguration (bspw. durch bauliche Veränderungen und/oder veränderte Gebäudenutzung) selbst erkennen. Bei älteren Bestandsgebäuden sind ggf. auch einige bauphysikalische Parameter nicht hinreichend genau bekannt und/oder ermittelbar, so daß diese über eine Heuristik bzw. das empirische Gebäudemodell ermittelt und/oder geschätzt werden können. Beispielsweise kann das empirische Model durch Zusammenführen historischer Werte zu den Ist-Daten der zumindest einen Eingangsgröße, den zugehörigen ermittelten Werten der zumindest einen Stellgröße sowie ermittelten Werten zumindest einer Regelgröße gebildet sein.

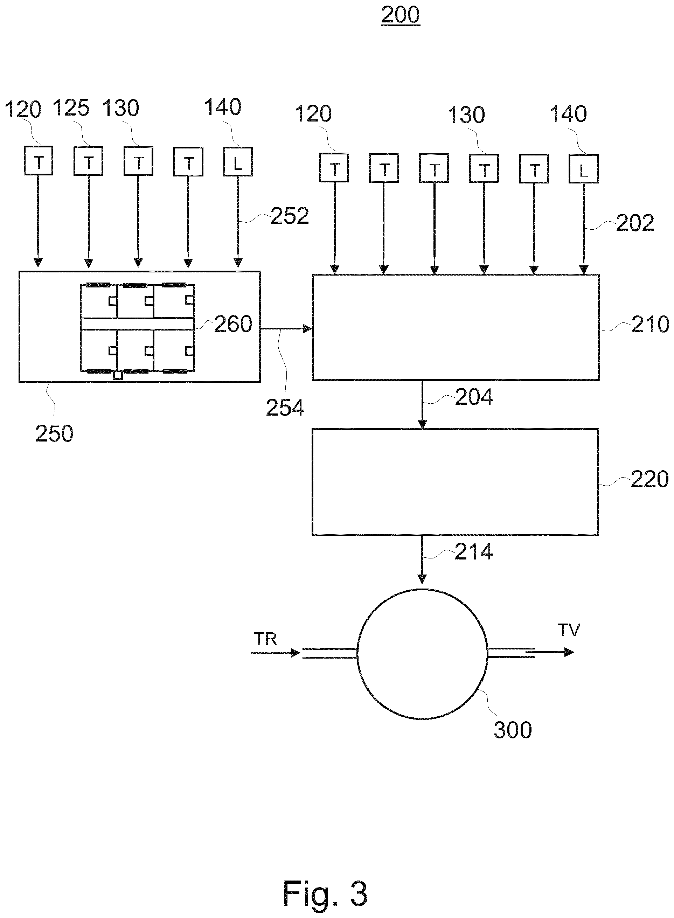

In Fig. 3 ist eine alternative Ausführungsform der Klimaregelung gezeigt, bei der die haus- oder verfahrenstechnische Anlage 200 eine Regeleinheit 220 und eine davon separate Simulationseinheit 250 aufweist, wobei das thermodynamische Modell 260 in der separaten Simulationseinheit 250 bereitgestellt ist. Für diesen Fall weist die Anlage 200 weiterhin eine Verarbeitungseinheit 210 auf, die Signaleingänge 202 aufweist, die mit dem Sensor bzw. den Sensoren 120, 130, 140 verbunden ist und Ist-Daten der Eingangsgröße(n) erhält. Die Verarbeitungseinheit 210 weist weiter einen weiteren Signaleingang 254 auf, der mit der Simulationseinheit 250 verbunden ist und eine Störgröße als Ausgabe der Simulationseinheit 250 erhält. Die Verarbeitungseinheit 210 ist eingerichtet, aus den Ist-Daten der Eingangsgröße(n) und der Störgröße ein Eingangssignal für die Regeleinheit 220 zu bilden. Die Verarbeitungseinheit 210 weist einen Signalausgang 204 auf, über den die Regelgröße an die Regeleinheit 220 übermittelt werden kann. Die Regeleinheit 220 steuert dann direkt das Stellglied 300, im gezeigten Ausführungsbeispiel eine Heizungsanlage, an, um das gewünschte Raumklima zu steuern.

In dem gezeigten Ausführungsbeispiel erhält die Simulationseinheit 250 als Eingangsgröße eine Wettervorhersage 125. Beispielsweise kann die Wettervorhersage über Internet an die Simulationseinheit 250 übermittelt werden, wobei zum einen das aktuelle Wetter abgefragt und mit in bzw. am Gebäude angeordneten Sensoren abgeglichen werden kann. Weiterhin kann eine kurzfristige Vorhersage über die nächsten Stunden für die Klimaregelung genutzt werden. So können beispielsweise kurzzeitige Temperaturunterschreitungen toleriert werden, wenn absehbar eine Aufheizung durch Sonneneinstrahlung zu erwarten ist. Andernfalls müßte beispielsweise erst geheizt und dann gekühlt werden, was für den Gesamtenergieverbrauch des Gebäudes nachteilig wäre. Ebenfalls kann die Abkühlung und der Luftfeuchtigkeitsanstieg durch einen bevorstehenden Regen berücksichtigt werden.

Die von der Simulationseinheit 250 ausgegebene Störgröße verändert dann das von der Verarbeitungseinheit 210 aufgrund der Sensordaten ermittelte Steuersignal für die Regeleinheit 220. Beispielsweise kann in der Verarbeitungseinheit eine herkömmliche Heizkurve hinterlegt sein, die dann aufgrund des Störsignals von der Simulationseinheit 250 modifiziert wird. Je nachdem, ob die Anlage 300 stromgeführt oder spannungsgeführt ist, kann die Simulationseinheit 250 die Störgröße entsprechend als Stromwert oder als Spannungswert ausgeben.

Die anhand von Fig. 3 beschriebene Ausführungsform erlaubt insbesondere die einfache Nachrüstung von bereits bestehenden Anlagen mit einer Simulationseinheit 250. Für den Fall, daß mehrere haus- oder verfahrenstechnische Anlagen zu regeln sind, können in der Simulationseinheit 250 mehrere Ausgabekanäle 254 bereitgestellt sein, die jeweils die entsprechenden Störgrößen als Strom- oder als Spannungsignal ausgeben können. Auf diese Weise können ganz verschiedene Reglereinheiten 220 für unterschiedliche Anlagen 300 über eine einzige Simulationseinheit 250 angesteuert werden.

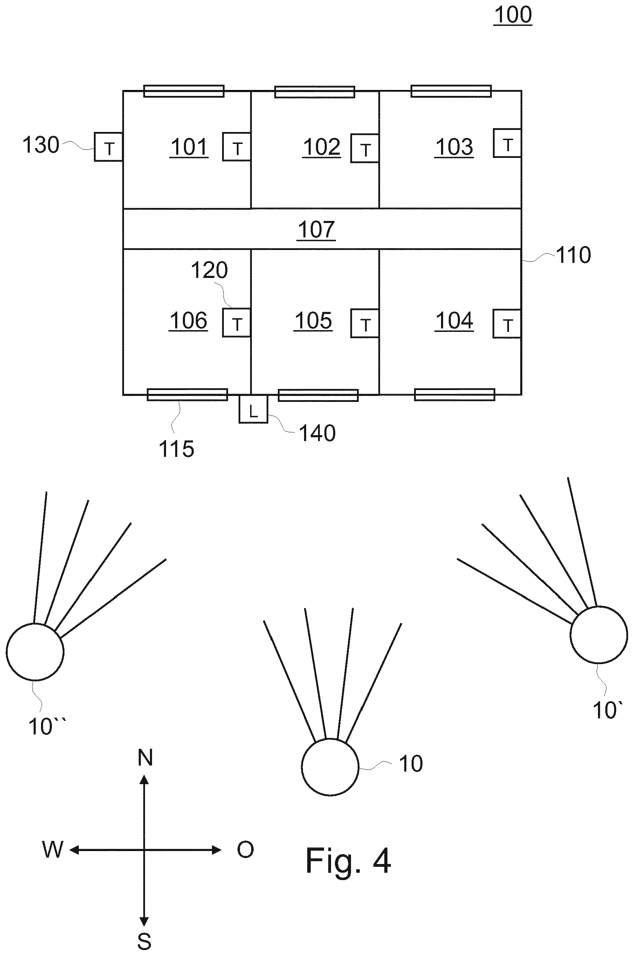

In Fig. 4 ist das Gebäude 100 aus Fig. 1 bei verschiedenen Sonnenständen dargestellt. So ist in Position 10' die morgendliche Sonneneinstrahlung, bei Position 10 die mittägliche und bei Position 10" die abendliche Sonneneinstrahlung gezeigt. Schon aus dieser schematischen Darstellung ergibt sich, daß die Sonneneinstrahlung, und damit der Wärme- und Lichteintrag, für verschiedene Räume über den Tag hinweg variiert. Diese Variation ist jedoch nicht zufällig, sondern kann für den Standort und die Ausrichtung des Gebäudes vorausberechnet und in dem thermodynamischen Modell abgebildet werden.

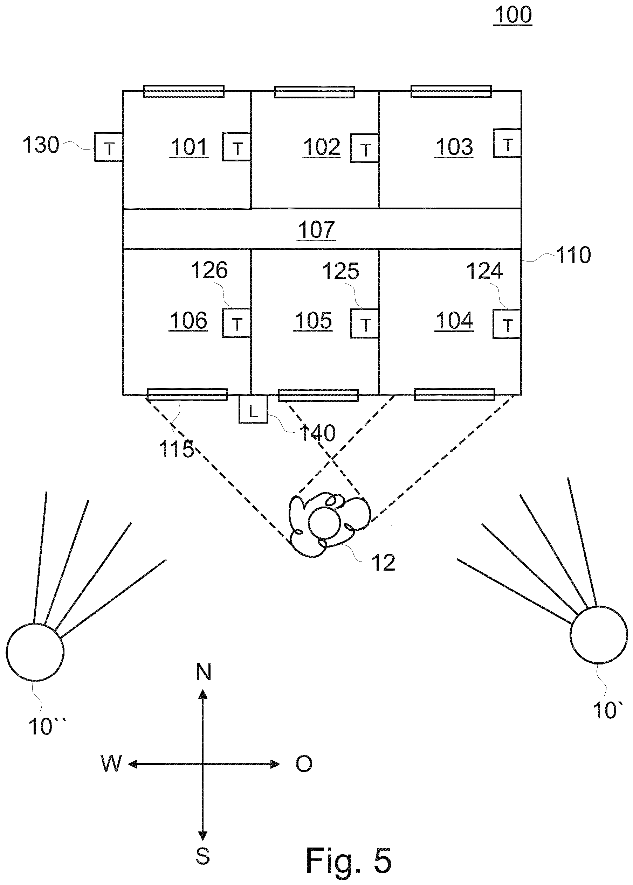

In Fig. 5 ist der Einfluß einer externen Verschattung, hier ein Baum 12, dargestellt. Mit dem Sonnenstand wandert auch der Schatten des Baums 12, dargestellt durch die gestrichelten Linien, über die Südfassade des Gebäudes und verschattet so unterschiedliche Bereiche, insbesondere Fenster 115, des Gebäudes. Selbstverständlich kann eine solche Verschattung auch durch andere Objekte als Bäume, etwa Nachbarbebauung, hervorgerufen werden. Das Einbeziehen der Gebäudeumgebung in das thermodynamische Modell erhöht die Zielgenauigkeit der Regelung und kann den erforderlichen Energieeinsatz vermindern, etwa indem eine Kühlung weniger stark betrieben wird. Weiterhin können temporäre Effekte, wie etwa die Verschattung des Sensors 140, in dem thermodynamischen Modell berücksichtigt werden, um so einer Fehlsteuerung vorzubeugen.

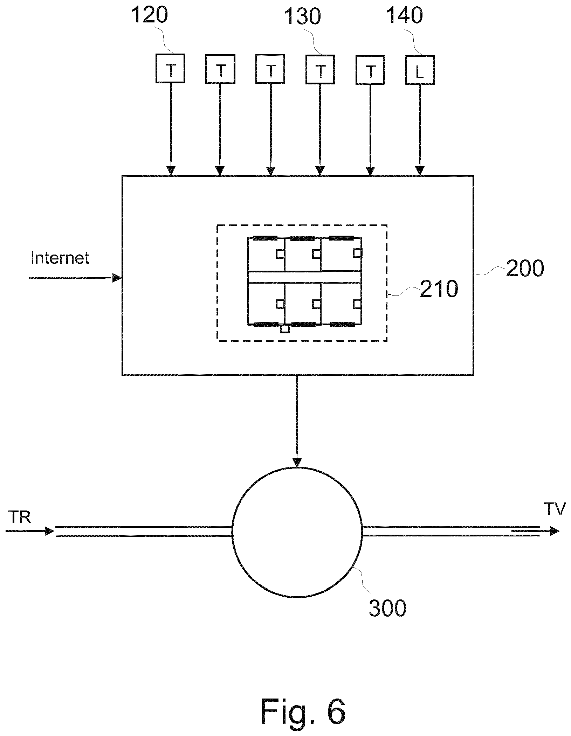

In Fig. 6 ist eine schematische Darstellung einer haus- oder verfahrenstechnische Anlage gemäß einem weiteren Ausführungsbeispiel der vorliegenden Erfindung gezeigt. Dabei gleicht die Anlage 200 im wesentlichen der in Fig. 2 gezeigten Anlage, weist jedoch einen Internetanschluß auf. Über den Internetanschluß kann die Simulationseinheit 210 beispielsweise den Wetterbericht, aber auch aktuelle Strom- und/oder Gaspreise abfragen, um so möglichst kostengünstig regeln zu können. Weiterhin kann die Simulationseinheit auch aktuelle Wetterdaten einer lokalen Wetterstation in der Nähe des Gebäudes erhalten.

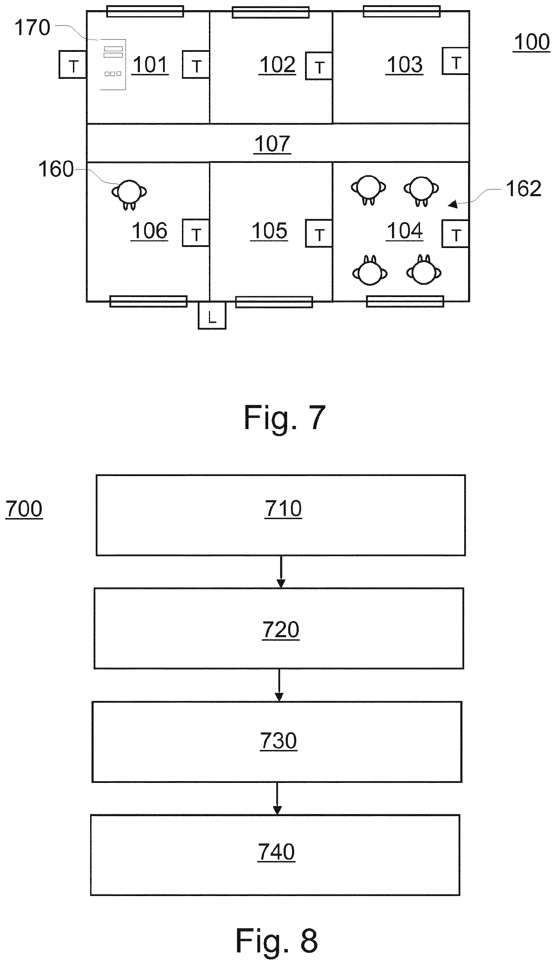

In Fig. 7 ist eine schematische Darstellung des Gebäudes aus Fig. 1 gezeigt, anhand derer das Einbeziehen der Gebäudenutzung erläutert werden soll. Insbesondere kann das thermodynamische Modell ein Modell zur Gebäudenutzung umfassen, das beispielsweise tageszeitabhängig und/oder lastabhängig und/oder nutzerabhängig aufgebaut ist. So kann beispielsweise das Modell zur Gebäudenutzung beispielsweise einen oder mehrere der folgenden Parameter berücksichtigen: (geschätzte) Anzahl der Personen in einem Raum, geschätzte Anzahl von thermodynamisch relevanten Betriebsmitteln in einem Raum, Raumbelegungspläne, Urlaubszeiten, Krankheitstage, Abwesenheitszeiten, sowie Art und Umfang von Tätigkeiten. Beispielsweise ist dem thermodynamischen Modell bekannt, daß in Raum 101 ein Computer 170 aufgestellt ist, der eine Wärmequelle darstellt. Ebenso kann dem thermodynamischen Modell mitgeteilt werden, daß sich in Raum 106 eine Person aufhält, wohingegen in Raum 104 ein Meeting mit einer Gruppe 162 von vier Personen stattfindet. Da jede Person sowohl eine Wärme- als auch eine Feuchtigkeitsquelle darstellt, sollte dies bei der Klimaregelung berücksichtigt werden. Da heutzutage Raumbelegungspläne, Urlaubspläne etc. ohnehin meist elektronisch vorliegen, ist eine Verknüpfung mit der Klimaregelung ohne unzumutbaren Aufwand herstellbar. Weiterhin kann die Klimaregelung auch mit einem System zur Zugangserfassung, z.B. über RFID-Leser, die in oder an Durchgängen zwischen Räumen angeordnet sind, verknüpft sein. Auf diese Weise kann die Personenzahl in einem bestimmten Raum automatisch erfaßt werden.

Insbesondere kann auf diese Weise zusätzlich zu den ohnehin in den Räumen vorhandenen Sensoren vorausschauend geregelt werden. Gleichermaßen kann das Einbeziehen von Urlaubszeiten oder Maschinenstillstandzeiten zu einer vorausschauenden Regelung führen, da das Raumklima bspw. für diese Perioden anders eingestellt werden kann. Auf diese Weise kann die Klimaregelung deutlich zielgenauer arbeiten als bei bisherigen Systemen.

In Fig. 8 ist ein Flußdiagramm eines Regelverfahrens 700 gemäß einem Ausführungsbeispiel der vorliegenden Erfindung gezeigt. Hierin wird in Schritt 710 eine thermodynamisches Modells für das zu regelnde Gebäude bereitgestellt, wobei das thermodynamische Modell zumindest eine Eingangsgröße aufweist. In Schritt 720 werden Ist-Daten der zumindest einen Eingangsgröße bereitgestellt, beispielsweise mittels interner und externer Sensoren oder auch über Internet. In Schritt 730 wird zumindest eine Stellgröße für die haus- oder verfahrenstechnische Anlage anhand des thermodynamischen Modells und der Ist-Daten der zumindest einen Eingangsgröße ermittelt. Dabei kann die Stellgröße auch über eine von dem thermodynamischen Modell bereitgestellte Störgröße angepaßt werden. In Schritt 740 wird dann die haus- oder verfahrenstechnischen Anlage mittels der zumindest einen ermittelten Stellgröße geregelt.

Die vorliegende Erfindung wurde anhand von Ausführungsbeispielen erläutert. Diese Ausführungsbeispiele sollen keinesfalls als einschränkend für die vorliegende Erfindung verstanden werden. Insbesondere können einzelne Merkmale der verschiedenen Ausführungsbeispiele in andere Ausführungsformen übernommen werden oder verschiedene Ausführungsbeispiele miteinander kombiniert werden, solange sich die kombinierten Merkmale nicht technisch bedingt gegenseitig ausschließen.

## Patentansprüche

1. Verfahren zur Regelung des Klimas in einem Gebäude mittels zumindest einer haus- oder verfahrenstechnischen Anlage, umfassend die Schritte:
(a) Bereitstellen eines thermodynamischen Modells für das Gebäude, wobei das thermodynamische Modell zumindest eine Eingangsgröße aufweist, wobei das thermodynamische Modell ein Modell zur Gebäudenutzung umfasst, das nutzerabhängig ist;
(b) Bereitstellen von Ist-Daten der zumindest einen Eingangsgröße mittels RFID-Lesern, die zur automatischen Erfassung einer Personenzahl in oder an Durchgängen zwischen Räumen des Gebäudes angeordnet sind;
(c) Ermitteln zumindest einer Stellgröße für die haus- oder verfahrenstechnische Anlage anhand des thermodynamischen Modells und der Ist-Daten der zumindest einen Eingangsgröße; und
(d) Regeln der haus- oder verfahrenstechnischen Anlage mittels der zumindest einen ermittelten Stellgröße.

2. Verfahren nach Anspruch 1, wobei das thermodynamische Modell ein thermodynamisches Modell der Gebäudekonstruktion umfaßt.

3. Verfahren nach Anspruch 2, wobei das thermodynamische Modell der Gebäudekonstruktion aufgrund bauphysikalischer Parameter des Gebäudes gebildet ist.

4. Verfahren nach Anspruch 3, wobei die bauphysikalische Parameter zumindest einen der folgenden Parameter umfassen: Wandaufbau, Deckenaufbau, Fußbodenaufbau, Fensterfläche, Wärmedurchgangskoeffizienten und Energiedurchlassgrade der Fenster, innere Wärmequellen, wie etwa Computer, Beamer, Lampen, innere Feuchtigkeitsquellen, wie etwa Naßräume, Dachaufbau, Verschattungsanlagen, ein Heizungssystem, ein Lüftungssystem, Sanitäranlagen, elektrische Anlagen, ein Klimasystem, Brunnen, ein Kühlsystem, Aufzüge, Vakuumanlagen, Kochstellen, Hebezeuge.

5. Verfahren nach einem der vorhergehenden Ansprüche, wobei das Modell zur Gebäudenutzung tageszeitabhängig und/oder lastabhängig ist.

6. Verfahren nach einem der vorhergehenden Ansprüche, wobei das Modell zur Gebäudenutzung zumindest einen der folgenden Parameter umfaßt: geschätzte Anzahl der Personen in einem Raum, geschätzte Anzahl von thermodynamisch relevanten Betriebsmitteln in einem Raum, Raumbelegungspläne, Urlaubszeiten, Krankheitstage, Abwesenheitszeiten, Art und Umfang von Tätigkeiten.

7. Verfahren nach einem der vorhergehenden Ansprüche, wobei das thermodynamische Modell ein Modell der Gebäudeumgebung umfaßt, und/oder wobei die Eingangsgröße eine Wettervorhersage umfaßt, und/oder wobei eine jeweilige Raumtemperatur in dem Gebäude modulierend einen Biorhythmus berücksichtigt, und/oder wobei das thermodynamische Modell ein empirisches Gebäudemodell umfaßt, und/oder wobei die ermittelte Stellgröße eine Störgröße ist, die zusammen mit der zumindest einen Eingangsgröße verarbeitet wird, und an eine Regelung der haus- oder verfahrenstechnischen Anlage übermittelt wird, und/oder wobei die zumindest eine ermittelte Stellgröße zumindest einen der folgenden Parameter umfaßt: eine Vorlauftemperatur, eine Pumpenleistung, einen elektrischen Stromverbrauch, einen Wasserverbrauch, einen Gasverbrauch, einen Ölverbrauch, eine Wärmeenergiemenge, und/oder wobei die zumindest eine Eingangsgröße mindestens einen der folgenden Parameter umfaßt: eine Außentemperatur, eine Raumtemperatur, eine Lichtintensität, eine Luftfeuchte, einen Luftdruck, eine Windgeschwindigkeit, ein Datum, eine Uhrzeit, geographische Koordinaten des Gebäudes, eine Vorlauftemperatur, eine Rücklauftemperatur, einen elektrischen Stromverbrauch, einen Wasserverbrauch, einen Gasverbrauch, einen Ölverbrauch, eine Wärmeenergiemenge, die Enthalpie der Gebäudeluft.

8. Verfahren nach Anspruch 7, wobei das Modell der Gebäudeumgebung eine Verschattung, insbesondere durch Nachbargebäude oder Bäume, umfaßt, wobei diese vorzugsweise in Abhängigkeit vom aktuellen Sonnenstand ermittelt wird.

9. Verfahren nach Anspruch 7 oder 8, wobei das empirische Gebäudemodel durch Zusammenführen historischer Werte zu den Ist-Daten der zumindest einen Eingangsgröße, den zugehörigen ermittelten Werten der zumindest einen Stellgröße sowie ermittelten Werten zumindest einer Regelgröße gebildet ist.

10. Verfahren nach einem der Ansprüche 7 bis 9, wobei die Regelung der haus- oder verfahrenstechnischen Anlage entweder stromgeführt oder spannungsgeführt ist, und die Störgröße entsprechend als Stromwert oder als Spannungswert ausgegeben wird.

11. Verfahren nach einem der vorhergehenden Ansprüche, weiterhin umfassend die Regelung der zumindest einen haus- oder verfahrenstechnischen Anlage, um einen Energieeinsatz im Gebäude zu reduzieren.

12. Haus- oder verfahrenstechnischen Anlage für ein Gebäude, umfassend
zumindest einen Dateneingang zur Verbindung mit einem Sensor zur Ermittlung von Ist-Daten zumindest einer Eingangsgröße, wobei der Sensor ein RFID-Leser ist,
zumindest einen Datenausgang zur Verbindung mit zumindest einem Stellglied zur Einstellung zumindest einer Stellgröße, und
eine Regelung, die ein thermodynamisches Modell des Gebäudes umfaßt und eingerichtet ist, ein Regelungsverfahren gemäß einem der vorhergehenden Ansprüche auszuführen.

13. Anlage nach Anspruch 12, wobei die haus- oder verfahrenstechnische Anlage eine Regeleinheit und eine davon separate Simulationseinheit aufweist, wobei das thermodynamische Modell in der separaten Simulationseinheit bereitgestellt wird.

14. Anlage nach Anspruch 13 oder 14, weiterhin umfassend eine Verarbeitungseinheit,
die zumindest einen Signaleingang aufweist, der mit dem Sensor verbunden ist und Ist-Daten der zumindest einen Eingangsgröße erhält,
sowie einen weiteren Signaleingang aufweist, der mit der Simulationseinheit verbunden ist und eine Störgröße als Ausgabe der Simulationseinheit erhält,
wobei die Verarbeitungseinheit eingerichtet ist, aus den Ist-Daten der zumindest einen Eingangsgröße und der Störgröße ein Eingangssignal für die Regeleinheit zu bilden, und
die Verarbeitungseinheit weiterhin einen Signalausgang aufweist, über den die Eingangsgröße an die Regeleinheit übermittelt werden kann.

## Claims

1. A method of controlling the climate in a building using at least one domestic system or at least one process technology system, comprising the following steps:
(a) providing a thermodynamic model for the building, wherein the thermodynamic model comprises at least one input variable, wherein the thermodynamic model comprises a building use model which is user-dependent;
(b) providing actual data for the at least one input variable by means of RFID readers which are arranged in or at passages between rooms of the building for recording numbers of persons;
(c) determining at least one control variable for the domestic system or the process technology system using the thermodynamic model and the actual values of the at least one input variable; and
(d) controlling the domestic system or the process technology system using the at least one determined control variable.

2. The method according to claim 1, wherein the thermodynamic model comprises a thermodynamic model of the building design.

3. The method according to claim 2, wherein the thermodynamic model of the building design is created on basis of structural physical parameters of the building.

4. The method according to claim 3, wherein the structural physical parameters include at least one of the following parameters: a wall structure, a ceiling structure, a floor structure, a window area, thermal transmittances and energy transmittances of the windows, internal heat sources such as computers, projectors, lamps, internal moisture sources such as wet rooms, root structures, shading systems, a heating system, a ventilation system, sanitary installations, electrical installations, a climate-control system, wells, a cooling system, lifts, vacuum systems, cooking points, lifting gear.

5. The method according to any one of the preceding claims, wherein the building use model is dependent on the time of day and/or load dependent.

6. The method according to any one of the preceding claims, wherein the building use model comprises at least one of the following parameters: an estimated number of persons in a room, an estimated number of thermodynamically relevant pieces of equipment in a room, room occupancy plans, holiday times, days off due to illness, times of absence, nature and scope of activities.

7. The method according to any one of the preceding claims, wherein the thermodynamic model comprises a model of the buildings environment, and/or wherein the input variable comprises a weather forecast, and/or wherein a biorhythm modulating a respective room temperature in the building is taken into consideration, and/or wherein the thermodynamic model comprises an empirical building model, and/or wherein the determined control variable is a disturbance variable which is processed together with the at least one input variable and transmitted to the control of the domestic system or the control of the process technology system, and/or wherein the at least one determined control variable comprises at least one of the following parameters: a supply temperature, a pump output, an electrical current consumption, a water consumption, a gas consumption, an oil consumption, a quantity of thermal energy, and/or wherein at least one input variable includes at least one of the following parameters: an external temperature, a room temperature, a light intensity, an humidity, an air pressure, a wind speed, a date, a time, geographical coordinates of the building, a supply temperature, a return temperature, an electrical current consumption, a water consumption, a gas consumption, an oil consumption, a quantity of heat energy, the enthalpy of the building air.

8. The method according to claim 7, wherein the model of the buildings environment comprises a shading, in particular by neighbouring buildings or trees, wherein this is preferably determined depending on the current position of the sun.

9. The method according to claim 7 or 8, wherein the empirical model of the buildings environment is created by combining historical values referring to the actual data of the at least one input variable, the relevant determined values of the at least one control variable as well as determined values of at least one control variable.

10. The method according to any one of claims 7 to 9, wherein controlling of the domestic system or the process technology system is either current or voltage-based and the disturbance variable is correspondingly outputted as a current or voltage value.

11. The method according to any one of the preceding claims, further comprising controlling the at least one domestic system or the at least one process technology system in order to reduce an energy use in the building.

12. A domestic system or a process technology system for a building, comprising
at least one data input for connecting with a sensor for determining actual data of at least one input variable, wherein the sensor is an RFID reader,
at least one data output for connecting with at least one controlling element for adjusting at least one control variable, and
a control that comprises a thermodynamic model of the building and is set up for carrying out a control method according to any of the preceding claims.

13. The system according to claim 12, wherein the domestic system or the process technology system comprises a control unit and a simulation unit, which is separate from the control unit, wherein the thermodynamic model is provided in the separate simulation unit.

14. The system according to claim 13 or 14, further comprising a processing unit comprising at least one signal input which is connected to the sensor and receives the actual data of the at least one input variable,
as well as a further signal input which is connected to the simulation unit and receives a disturbance variable as output of the simulation unit,
wherein the processing unit is set up to form an input signal for the control unit from the actual data of the at least one input variable and the disturbance variable, and
the processing unit further comprises a signal output for transmitting the input variable to the control unit.

## Revendications

1. Procédé destiné à réguler les conditions climatiques dans un bâtiment, au moyen d'au moins une installation technologique domestique ou d'ingénierie des procédés, comprenant les étapes suivantes :
(a) la fourniture d'un modèle thermodynamique pour le bâtiment, le modèle thermodynamique présentant au moins une grandeur d'entrée, et le modèle thermodynamique comprenant un modèle pour l'utilisation du bâtiment, qui est fonction de l'utilisateur ;
(b) la fourniture de données réelles instantanées de ladite au moins une grandeur d'entrée, au moyen de lecteurs RFID, qui sont agencés en vue de la saisie automatique d'un nombre de personnes dans ou au niveau de passages entre des locaux du bâtiment ;
(c) la détermination d'au moins une grandeur de réglage pour l'installation technologique domestique ou d'ingénierie des procédés, au regard du modèle thermodynamique et des données réelles instantanées de ladite au moins une grandeur d'entrée ; et
(d) la régulation de l'installation technologique domestique ou d'ingénierie des procédés à l'aide de ladite au moins une grandeur de réglage.

2. Procédé selon la revendication 1, d'après lequel le modèle thermodynamique comprend un modèle thermodynamique de la construction du bâtiment.

3. Procédé selon la revendication 2, d'après lequel le modèle thermodynamique de la construction du bâtiment est formé sur la base de paramètres physiques de construction du bâtiment.

4. Procédé selon la revendication 3, d'après lequel les paramètres physiques de construction comprennent au moins l'un des paramètres suivants : la structure de construction des murs, la structure de construction des dalles, la structure de construction des planchers, la surface de fenêtres, le coefficient de transmission thermique et le degré de perméabilité énergétique des fenêtres, des sources de chaleur intérieures comme par exemple des ordinateurs, projecteurs, lampes, des sources d'humidité intérieures comme par exemple des salles d'eau, la structure de construction du toit, des systèmes d'ombrage, un système de chauffage, un système de ventilation, des installations sanitaires, des installations électriques, un système de climatisation, des puits, un système de refroidissement, des ascenseurs, des installations de vide, des points de cuisson, des élévateurs.

5. Procédé selon l'une des revendications précédentes, d'après lequel le modèle pour l'utilisation du bâtiment est fonction de l'heure du jour et/ou fonction de la charge.

6. Procédé selon l'une des revendications précédentes, d'après lequel le modèle pour l'utilisation du bâtiment comprend au moins l'un des paramètres suivants : le nombre estimé de personnes dans un local, le nombre estimé de moyens de fonctionnement importants sur le plan thermodynamique dans un local, des plans d'occupation des locaux, des périodes de congés, des jours de maladie, des périodes d'absence, le type et l'ampleur d'activités.

7. Procédé selon l'une des revendications précédentes, d'après lequel le modèle thermodynamique comprend un modèle de l'environnement du bâtiment, et/ou d'après lequel la grandeur d'entrée comprend des prévisions météorologiques, et/ou d'après lequel une température de local dans le bâtiment prend en considération de manière modulante un biorythme, et/ou d'après lequel le modèle thermodynamique comprend un modèle de bâtiment empirique, et/ou d'après lequel la grandeur de réglage déterminée est une grandeur perturbatrice, qui est traitée en commun avec ladite au moins une grandeur d'entrée, et est transmise à une régulation de l'installation technologique domestique ou d'ingénierie des procédés, et/ou d'après lequel ladite au moins une grandeur de réglage déterminée comprend au moins l'un des paramètres suivants : une température de circuit aller, une puissance de pompe, une consommation de courant électrique, une consommation d'eau, une consommation de gaz, une consommation d'huile, une quantité d'énergie thermique, et/ou d'après lequel ladite au moins une grandeur d'entrée comprend au moins l'un des paramètres suivants : une température extérieure, une température de local, une intensité lumineuse, une humidité d'air, une pression d'air, une vitesse du vent, une date, une heure, des coordonnées géographiques du bâtiment, une température de circuit aller, une température de circuit retour, une consommation de courant électrique, une consommation d'eau, une consommation de gaz, une consommation d'huile, une quantité d'énergie thermique, l'enthalpie de l'air du bâtiment.

8. Procédé selon la revendication 7, d'après lequel le modèle de l'environnement du bâtiment comprend un ombrage, notamment par des bâtiments voisins ou des arbres, cet ombrage étant de préférence déterminé en fonction de la position actuelle du soleil.

9. Procédé selon la revendication 7 ou la revendication 8, d'après lequel le modèle de bâtiment empirique est formé par le regroupement de valeurs historiques avec les valeurs réelles instantanées de ladite au moins une grandeur d'entrée, les valeurs déterminées associées de ladite au moins une grandeur de réglage, ainsi que des valeurs déterminées d'au moins une grandeur de régulation.

10. Procédé selon l'une des revendications 7 à 9, d'après lequel la régulation de l'installation technologique domestique ou d'ingénierie des procédés est contrôlée par régulation du courant ou régulation de la tension, et la grandeur perturbatrice est délivrée de manière correspondante en tant que valeur de courant ou en tant que valeur de tension.

11. Procédé selon l'une des revendications précédentes, comprenant en outre la régulation de ladite au moins une installation technologique domestique ou d'ingénierie des procédés en vue de réduire une utilisation d'énergie dans le bâtiment.

12. Installation technologique domestique ou d'ingénierie des procédés pour un bâtiment, comprenant :
au moins une entrée de données pour la liaison avec un capteur destiné à la détermination de données réelles instantanées d'au moins une grandeur d'entrée, le capteur étant un lecteur RFID,
au moins une sortie de données pour la liaison avec au moins un organe de réglage pour régler au moins une grandeur de réglage, et
une régulation, qui comprend un modèle thermodynamique du bâtiment et est configurée pour exécuter un procédé de régulation selon l'une des revendications précédentes.

13. Installation selon la revendication 12, l'installation technologique domestique ou d'ingénierie des procédés présentant une unité de régulation et une unité de simulation séparée de la précédente, le modèle thermodynamique étant préparé et fourni dans l'unité de simulation séparée.

14. Installation selon la revendication 12 ou la revendication 13, comprenant en outre une unité de traitement de données,
qui comporte au moins une entrée de signal reliée au capteur et recevant des données réelles instantanées de ladite au moins une grandeur d'entrée,
et qui comporte une autre entrée de signal reliée à l'unité de simulation et recevant une grandeur perturbatrice en tant que sortie de l'unité de simulation,
l'unité de traitement de données étant configurée pour former, à partir des données réelles instantanées de ladite au moins une grandeur d'entrée et de la grandeur perturbatrice, un signal d'entrée pour l'unité de régulation, et
l'unité de traitement de données présentant en outre une sortie de signal, par l'intermédiaire de laquelle la grandeur d'entrée peut être transmise à l'unité de régulation.
